# EUROPEAN PATENT APPLICATION

(11) **EP 4 750 072 A1**
(43) Date of publication of application: **27.05.2026**
(21) Application number: 24856597.0
(22) Date of filing: 29.05.2024
(51) Int. Cl.: H04N 23/65, H04N 23/61, H04N 23/57, H04N 5/77, G02B 27/01, H04N 23/661

(54) **METHOD AND DEVICE OF CAMERA CONTROL ACCORDING TO CHANGE OF SPACE**

(30) Priority: 23.08.2023 KR 20230110297; 10.11.2023 KR 20230155555
(71) Applicant: Samsung Electronics Co., Ltd., Suwon-si, Gyeonggi-do 16677 (KR)
(72) Inventor: KIM, Chulkwi, Suwon-si Gyeonggi-do 16677 (KR)
(74) Representative: Gulde & Partner
(86) International application number: PCT/KR2024/007286
(87) International publication number: WO 2025/041978

(57) **Abstract**

According to an embodiment, a head-mounted electronic device may turn on a camera to photograph an object space corresponding to at least a portion of a sensing range of the camera, determine whether an image related to the object space is stored in a memory, and determine whether to maintain the camera in a turned-on state on the basis of a determination result.

## Description

### TECHNICAL FIELD

Hereinafter, a technique related to a method of controlling a camera according to a change in a space is disclosed.

### BACKGROUND ART

Recently, virtual reality (VR), augmented reality (AR), and mixed reality (MR) technologies utilizing computer graphics technology have been developed. In this case, the VR technology refers to a technology for building a virtual space that does not exist in the real world using a computer and making the virtual space feel real, and AR or MR technology refers to a technology for adding and representing information generated by a computer onto the real world, in other words, allowing interaction with a user in real time by combining the real world with a virtual world.

Among these technologies, AR and MR technologies are utilized in conjunction with technologies in various fields (e.g., broadcast, medical, and gaming technologies). Representative examples of integrating and using the AR technology in the broadcast technology field are a case where a weather map in front of a weather caster who delivers a weather forecast on a television (TV) smoothly changes or a case where an advertising image that does not exist in a stadium is inserted into a screen as if the advertising image actually exists in the stadium during a sports broadcast.

A representative service for providing a user with AR or MR is the "metaverse". The metaverse is a compound word of "meta" meaning virtual or abstract and "universe" meaning the real world, which refers to three-dimensional (3D) virtual world. The metaverse is a more advanced concept than the existing term, "virtual reality environment", and provides an AR environment in which the virtual world, such as the web and the Internet, is absorbed into the real world.

### DISCLOSURE OF THE INVENTION

### TECHNICAL SOLUTIONS

A head-mounted electronic device according to an embodiment may include a camera configured to capture the outside, a memory storing executable instructions, and a processor configured to execute the instructions, wherein the instructions, when executed, may cause the processor to turn on the camera to capture a target space corresponding to at least a portion of a sensing range of the camera, determine whether an image related to the target space is stored in the memory 130 or a server, and determine whether to keep the camera turned on based on a result of the determining.

A method performed by a processor of a head-mounted electronic device according to an embodiment may include capturing a target space corresponding to at least a portion of a sensing range of a camera of an electronic device that captures a real space by turning on the camera, determining whether an image related to the target space is stored in a memory or a server, and determining whether to keep the camera turned on based on a result of the determining.

### BRIEF DESCRIPTION OF DRAWINGS

FIG. 1 is a block diagram of an example of a configuration of an electronic device according to various embodiments.
FIGS. 2A and 2B are diagrams illustrating an example of a front surface and a rear surface of an electronic device according to various embodiments.
FIG. 3 illustrates an example of establishing a virtual space and an input from a user and an output to the user in the virtual space according to various embodiments.
FIG. 4 is a flowchart schematically illustrating a process of controlling a camera for image capturing by an electronic device according to various embodiments.
FIG. 5 is a diagram illustrating a process of identifying a target space and determining whether an image of the identified target space is stored in a memory or a server by an electronic device according to various embodiments.
FIG. 6 is a diagram illustrating a process of determining whether a change in a target space occurs by an electronic device according to various embodiments.
FIG. 7 is a flowchart illustrating a method of controlling a camera by an electronic device based on whether a change in a target space occurs according to various embodiments.
FIG. 8 is a diagram illustrating a process of detecting a moving object in a target space from a real-time image by an electronic device according to various embodiments.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

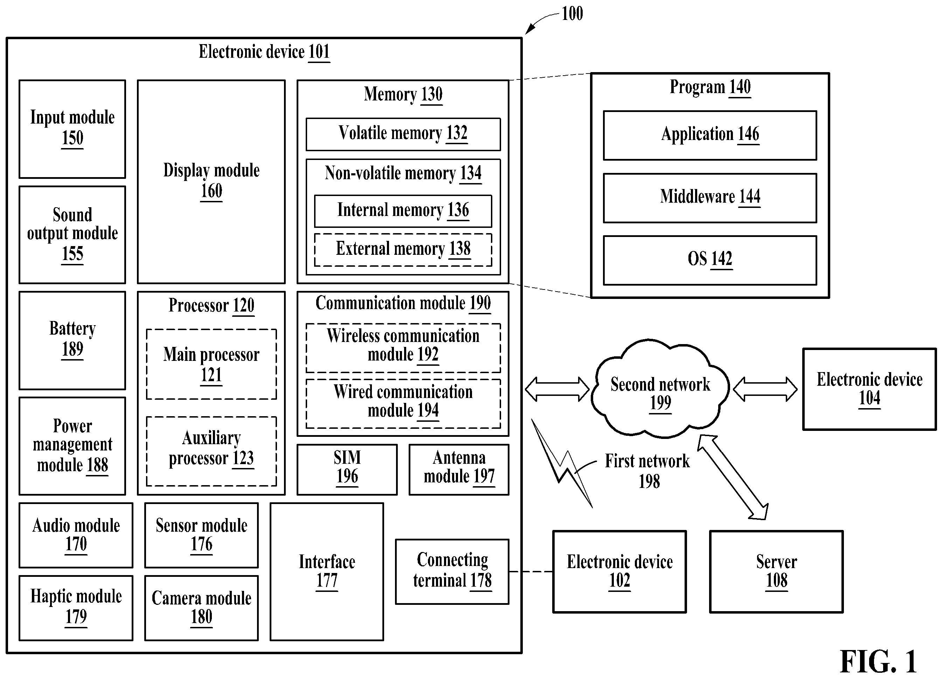

FIG. 1 is a block diagram of an example of a configuration of an electronic device according to various embodiments.

FIG . 1 is a block diagram illustrating an electronic device 101 in a network environment 100 according to various embodiments. Referring to FIG. 1, an electronic device 101 in the network environment 100 may communicate with an electronic device 102 via a first network 198 (e.g., a short-range wireless communication network), or communicate with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102) (e.g., a speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., a mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199.

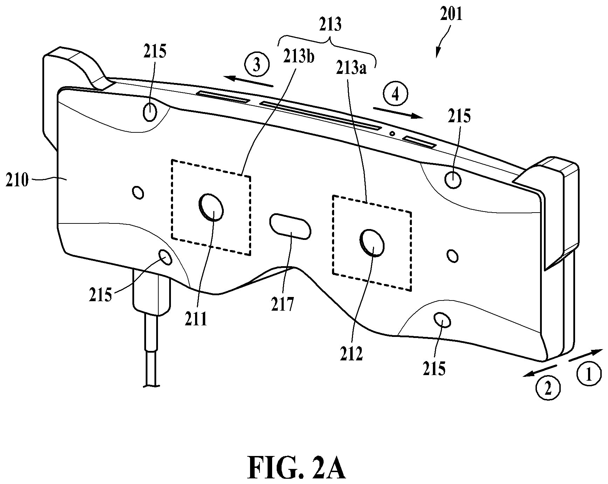

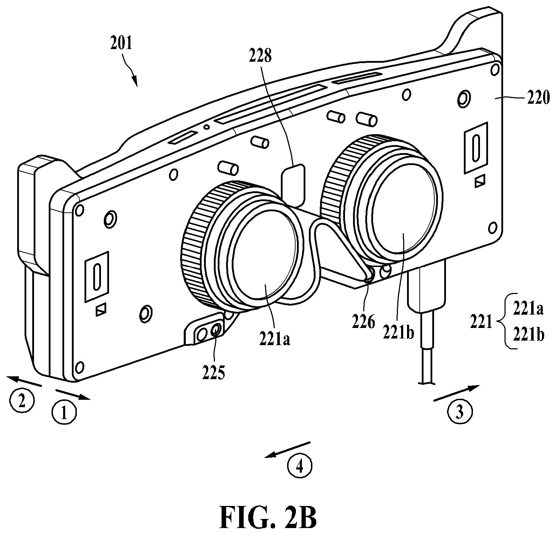

Each of the electronic devices 102 and 103, and the server 108 may be a device of a same type as, or a different type, from the electronic device 101. According to an embodiment, all or some of operations to be executed at the electronic device 101 may be executed by one or more of the external electronic devices 102, 103, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. The present disclosure mainly describes an example in which the electronic device 101 is an augmented reality (AR) device (e.g., an electronic device 201 of FIG. 2), and among the external electronic devices 102 and 103, and the server 108, the server 108 transmits a result of executing a virtual space or an additional function or service related to the virtual space to the electronic device 101.

The server 108 may include a processor 181, a communication module 182, and a memory 183. The processor 181, the communication module 182, and the memory 183 may be configured similarly to the processor 120, the communication module 190, and the memory 130 of the electronic device 101. For example, the processor 181 may provide a virtual space and interaction between users in the virtual space by executing an instruction stored in the memory 183. The processor 191 may generate at least one of the virtual space, visual information, auditory information, or haptic information regarding an object in the virtual space. For example, as the visual information, the processor 181 may generate rendering data (e.g., visual rendering data) obtained by rendering an external figure (e.g., the shape, size, color, or texture) of the virtual space and an external figure (e.g., the shape, size, color, or texture) of an object positioned in the virtual space. In addition, the processor 181 may generate rendering data obtained by rendering a change (e.g., a change in an external figure of an object, sound generation, or haptic generation) based on at least one of interaction between objects (e.g., a physical object, a virtual object, or an avatar object) in the virtual space or a user input for an object (e.g., a physical object, a virtual object, or an avatar object). The communication module 182 may establish communication between a first electronic device (e.g., the electronic device 101) of the user and a second electronic device (e.g., the electronic device 102) of another user. The communication module 182 may transmit at least one of the visual information, the haptic information, or the auditory information described above to the first electronic device and the second electronic device. For example, the communication module 182 may transmit the rendering data.

For example, the server 108 may render and transmit content data executed in an application to the electronic device 101, and the electronic device 101 that receives the data may output the content data to the display module 160. When the electronic device 101 detects a user motion via an IMU sensor or the like, the processor 120 of the electronic device 101 may correct the rendering data received from the external electronic device 102 based on the motion information and output the corrected data to the display module 160. Alternatively, the processor 120 of the electronic device 101 may transmit the motion information to the server 108 to send a request to update screen data based on the motion data. However, the example is not limited thereto, and the rendering described above may be performed by various types of the electronic devices 102 and 103, such as a smartphone or a case device that may keep and charge the electronic device 101. Rendering data that is generated by the external electronic devices 102 and 103 and corresponds to the virtual space described above may be provided to the electronic device 101. In another example, the electronic device 101 may receive virtual space information (e.g., vertex coordinates defining the virtual space, texture, and color) and object information (e.g., vertex coordinates defining the external figure of the object, texture, and color) from the server 108 and may perform rendering based on the received data.

FIGS. 2A and 2B are diagrams illustrating an example of a front surface and a rear surface of an electronic device according to various embodiments. FIG. 2A is an external figure of an electronic device 201 viewed in a first direction ①, and FIG. 2B is an external figure of the electronic device 201 viewed in a second direction . When a user wears the electronic device 201, the external figure that the eyes of the user view may be FIG. 2B.

Referring to FIG. 2A, the electronic device 201 (e.g., the electronic device 101 of FIG. 1) according to various embodiments may provide a service that provides a user with extended reality (XR) experience. For example, the XR or XR service may be defined as a service that collectively refers to virtual reality (VR), AR, and/or mixed reality (MR).

According to an embodiment, the electronic device 201 may refer to a head-mounted device or head-mounted display worn on a head part of a user and may be formed as at least one of glasses, goggles, a helmet, or a hat. The electronic device 201 may be a video see-through (VST) type configured to allow light emitted by a display to reach the user's eye but block external light from reaching the user's eye when the electronic device 201 is worn by the user.

According to an embodiment, the electronic device 201 may be worn on the head part of the user to provide the user with a video related to an XR service. For example, the electronic device 201 may provide XR content (hereinafter, also referred to as an XR content video) that is output to show at least one virtual object in a display area or an area determined to be a field of view (FoV) of the user as an overlay. According to an embodiment, the XR content may refer to an image or a video that shows at least one virtual object as the virtual object is added to a virtual space or a video related to a real space obtained via a camera (e.g., a camera for image capturing). According to an embodiment, the electronic device 201 may provide the XR content based on a function performed by the electronic device 201 and/or a function performed by one or more external electronic devices (e.g., the electronic devices 102 and 104 of FIG. 1 and the server 108 of FIG. 1).

According to an embodiment, the electronic device 201 may be at least partially controlled by an external electronic device (e.g., the electronic device 102 or 104 of FIG. 1), and under the control of the external electronic device, at least one function may be performed, but at least one function may be performed independently.

Referring to FIG. 2A, a vision sensor may be disposed on a first surface of a main body 210 housing of the electronic device 201. For example, the vision sensor may include a depth sensor 217 and/or cameras (e.g., second functional cameras 211 and 212 and first functional cameras 215) to obtain information related to a surrounding environment of the electronic device 201.

In an embodiment, the second functional cameras 211 and 212 may obtain an image related to the surrounding environment of the electronic device 201. In an embodiment, the first functional cameras 215 may obtain an image while a wearable electronic device is worn by the user. For example, the first functional cameras 215 may be used for hand detection, tracking, and recognition of a gesture (e.g., a hand motion) of the user. For example, the first functional cameras 215 may be used for 3 degrees of freedom (DoF) or 6 DoF head tracking, position (space or environment) recognition, and/or movement recognition. In an embodiment, the second functional cameras 211 and 212 may be used for hand detection, tracking, and the user's gesture.

In an embodiment, the depth sensor 217 may be configured to transmit a signal and receive a signal reflected from a subject and may be used to determine a distance from an object, such as time of flight (TOF). In an embodiment, instead of or in addition to the depth sensor 217, cameras 211, 212, and 215 may determine a distance from an object.

Referring to FIG. 2B, cameras 225 and 226 for facial recognition and/or a display 221 (and/or a lens) may be disposed on a second surface 220 of the main body 210 housing.

In an embodiment, the cameras 225 and 226 for facial recognition adjacent to the display may be used to recognize the face of a user or may recognize and/or track both eyes of the user.

In an embodiment, the display 221 (and/or the lens) may be disposed on the second surface 220 of the electronic device 201. In an embodiment, the electronic device 201 may not include some of the plurality of cameras 215.

According to an embodiment, the electronic device 201 may include the main body 210 on which at least some of the components of FIG. 1 are mounted, the display 221 (e.g., the display module 160 of FIG. 1) disposed in the first direction ① of the main body 210, the first functional camera 215 (e.g., a camera for recognition) disposed in the second direction ② of the main body 210, the second functional cameras 211 and 212 (e.g., cameras for image capturing) disposed in the second direction ②, a third functional camera 228 (e.g., a camera for eye gaze tracking) disposed in the first direction ①, the fourth functional cameras 225 and 226 (e.g., cameras for facial recognition) disposed in the first direction ①, the depth sensor 217 disposed in the second direction ②, and/or the touch sensor 213 disposed in the second direction ②. Although not illustrated in the drawings, the main body 210 may include a memory (e.g., the memory 130 of FIG. 1) and a processor (e.g., the processor 120 of FIG. 1) and may further include other components illustrated in FIG. 1.

According to an embodiment, the display 221 may include a liquid crystal display (LCD), a digital mirror device (DMD), liquid crystal on silicon (LCoS), an organic light-emitting diode (OLED), or a micro LED.

In an embodiment, when the display 221 is formed of one of the LCD, DMD, or LCoS, the electronic device 201 may include a light source that emits light to a screen output area of the display 221. In another embodiment, when the display 221 is able to generate light by itself, for example, when the electronic device 201 is formed of the OLED or micro LED, the electronic device 201 may provide the user with an XR content image with decent quality without including a separate light source. In an embodiment, since the light source is unnecessary when the display 221 is implemented by the OLED or micro LED, the weight of the electronic device 201 may be reduced.

According to an embodiment, the display 221 may include a first transparent member 221a and/or a second transparent member 221b. The user may use the electronic device 201 while wearing the electronic device 201 on their face. The first transparent member 221a and/or the second transparent member 221b may be formed of a glass plate, a plastic plate, or polymer and may be transparently or translucently formed. According to an embodiment, the first transparent member 221a may be disposed to face the right eye of the user in the third direction ③, and the second transparent member 221b may be disposed to face the left eye of the user in a fourth direction ④. According to various embodiments, when the display 221 is transparent, the display 221 may be disposed at a position facing the eyes of the user and may be included in a screen display unit.

According to an embodiment, the display 221 may include a lens. The lens may serve to adjust the focus to show a screen (e.g., the XR content image) output to the display 221 to the eyes of the user. For example, light emitted from the display panel may pass through the lens and may be transmitted to the user. For example, the lens may include a Fresnel lens, a pancake lens, or a multi-channel lens.

According to an embodiment, the electronic device 201 may include a plurality of cameras. For example, the cameras may include the first functional camera 215 (e.g., a camera for recognition) disposed in the second direction ② of the main body 210, the second functional cameras 211 and 212 (e.g., cameras for image capturing) disposed in the second direction ②, the third functional camera 225 (e.g., a camera for eye gaze tracking) disposed in the first direction ①, and/or the fourth functional cameras 226 (e.g., cameras for facial recognition) disposed in the first direction ① but may further include other functional cameras that are not illustrated.

According to an embodiment, the first functional camera 215 (e.g., the camera for recognition) may be used to sense a motion of the user or recognize a gesture of the user. The first functional camera 215 may support at least one of head tracking, hand detection, hand tracking, and space recognition. For example, the first functional camera 215 may mainly use a global shutter (GS) camera that has superior performance compared to a rolling shutter (RS) camera to detect a hand motion and a subtle motion of a finger and track the motion, and may include a stereo camera including two or more GS cameras for head tracking and space recognition. The first functional camera 215 may perform a simultaneous localization and mapping (SLAM) function to recognize information (e.g., the position and/or direction) related to the surrounding space through depth capturing and space recognition for 6 DoF.

According to an embodiment, the second functional cameras 211 and 212 (e.g., the cameras for image capturing) may be used to capture the outside and generate and transmit an image or a video corresponding to the outside to a processor (e.g., the processor 120 of FIG. 1). The processor may display an image provided by the second functional cameras 211 and 212 to the display 221. The second functional cameras 211 and 212 may be referred to as high resolution (HR) or photo video (PV) and may include an HR camera. For example, the second functional cameras 211 and 212 may include a color camera equipped with functions to obtain a high-quality image, such as an auto focus (AF) function and an optical image stabilizer (OIS) function. However, the example is not limited thereto, and the second functional cameras 211 and 212 may also include a GS camera or an RS camera.

According to an embodiment, the third functional camera 225 (e.g., the camera for eye gaze tracking) may be disposed on the display 221 (or inside the main body) so that the camera lens faces the eyes of the user when the user wears the electronic device 201. The third functional camera 225 may be used to detect and track (eye tracking (ET)) a pupil. The processor may determine a gaze direction by tracking motions of the left and right eyes of the user in an image received from the third functional camera 225. The processor may position the center of the XR content image displayed on the display area according to a direction in which the pupil gazes by tracking the position of the pupil. For example, the third functional camera 225 may use a GS camera to detect a pupil and track a pupil motion. The third functional camera 225 may be respectively installed for the left and right eyes, and the performance and specification of each camera may be the same.

According to an embodiment, the fourth functional cameras 225 and 226 (e.g., the cameras for facial recognition) may be used to detect and track (face tracking (FT)) a facial expression of the user when the user wears the electronic device 201.

According to an embodiment, the electronic device 201 may include a lighting unit (e.g., an LED) (not illustrated) as an auxiliary means of the cameras. For example, when the third functional camera 225 tracks an eye motion, as an auxiliary means to easily detect the gaze, the third functional camera 225 may use lighting included in the display so that emitted light (e.g., an IR LED of IR wavelength) faces both eyes of the user. In another example, the second functional cameras 211 and 212 may further include a lighting unit (e.g., flash) as an auxiliary means to supplement the ambient brightness when capturing the outside.

According to an embodiment, the depth sensor (or a depth camera) 217 may be used to determine a distance from an object (e.g., an object), such as TOF. The TOF may be a method of measuring a distance from an object using a signal (e.g., near-IR, ultrasound, or laser). After transmitting a signal from a transmitter, the receiver may measure the signal, and a distance from an object may be measured based on the TOF of the signal.

According to an embodiment, the touch sensor 213 may be disposed in the second direction ② of the main body 210. For example, when the user wears the electronic device 201, the eyes of the user may view in the first direction ① of the main body. The touch sensor 213 may be implemented as a single type or a type separated into left and right according to the shape of the main body 210 but is not limited thereto. For example, when the touch sensor 213 is implemented as a type separated into left and right as illustrated in FIG. 2A and the user wears the electronic device 201, a first touch sensor 213a may be disposed at a position of the right eye of the user like a third direction ③, and a second touch sensor 213b may be disposed at a position of the left eye of the user like a fourth direction ④.

The touch sensor 213 may recognize a touch input using at least one of capacitive, resistive, IR, and ultrasonic schemes. For example, the capacitive touch sensor 213 may recognize a physical touch (or contact) input of an external object or a hovering input (or proximity). According to an embodiment, the electronic device 201 may use a proximity sensor to enable proximity recognition of an external object.

According to an embodiment, the touch sensor 213 may have a two-dimensional (2D) surface and may transmit touch data (e.g., touch coordinates) of an external object (e.g., a finger of a user) in contact with the touch sensor 213 to the processor 120. The touch sensor 213 may sense a hovering input with respect to an external object (e.g., a finger of a user) approaching within a first distance from the touch sensor 213 or may sense a touch input touching the touch sensor 213.

According to an embodiment, when the external object touches the touch sensor 213, the touch sensor 213 may provide 2D information on a contact point as "touch data" to the processor 120. The touch data may be described as a "touch mode". When the external object is positioned (or is hovered above the proximity or touch sensor) within the first distance from the touch sensor 213, the touch sensor 213 may provide hovering data on the time or position of hovering around the touch sensor 213 to the processor 120. The hovering data may be described as a "hovering mode or proximity mode".

According to an embodiment, the electronic device 201 may obtain the hovering data using at least one of the touch sensor 213, the proximity sensor (not illustrated), and/or the depth sensor 217 to generate information about the distance between the touch sensor 213 and the external object, the position, or the time.

According to an embodiment, the main body 210 may include a processor (e.g., the processor 120 of FIG. 1) and a memory (e.g., the memory 130 of FIG. 1).

According to an embodiment, the memory may store various instructions performed by the processor. The instructions may include a control command, such as arithmetic and logical operations, data movement, or an input and an output that may be recognized by the processor. The memory may include volatile memory (e.g., the volatile memory 132 of FIG. 1) and non-volatile memory (e.g., the non-volatile memory 134 of FIG. 1) to temporarily or permanently store a variety of data.

According to an embodiment, the processor may be a component operatively, functionally, and/or electrically connected to each component of the electronic device 201 to perform data processing or an operation related to control and/or communication of each component. The operations performed by the processor may be stored in the memory and when executed, may be executed by instructions that cause the processor to operate.

Hereinafter, the operation and data processing functions of the processor implemented in the electronic device 201 are not limited, and a series of operations related to an XR content service function is described. The operations of the processor described below may be performed by executing instructions stored in the memory.

According to an embodiment, the processor may generate a virtual object based on virtual information based on an image. The processor may output the virtual object related to the XR service together with background space information regarding the display 221. For example, via the second functional cameras 211 and 212, the processor may obtain an image by capturing an image related to the real space corresponding to the FoV of the user who wears the electronic device 201 or may generate a virtual space with respect to a virtual environment. For example, the processor may control XR content (hereinafter, also referred to as an XR content screen) on the display 221, wherein the XR content is output to show at least one virtual object overlapped in an FoV area or an area that is determined to be the FoV of the user.

According to an embodiment, the electronic device 201 may have a form factor to be worn on the head of the user. The electronic device 201 may further include a strap and/or a wearing member to be fixed to a body part of the user. The electronic device 201 may provide user experience based on AR, VR, and/or MR while being worn on the head of the user.

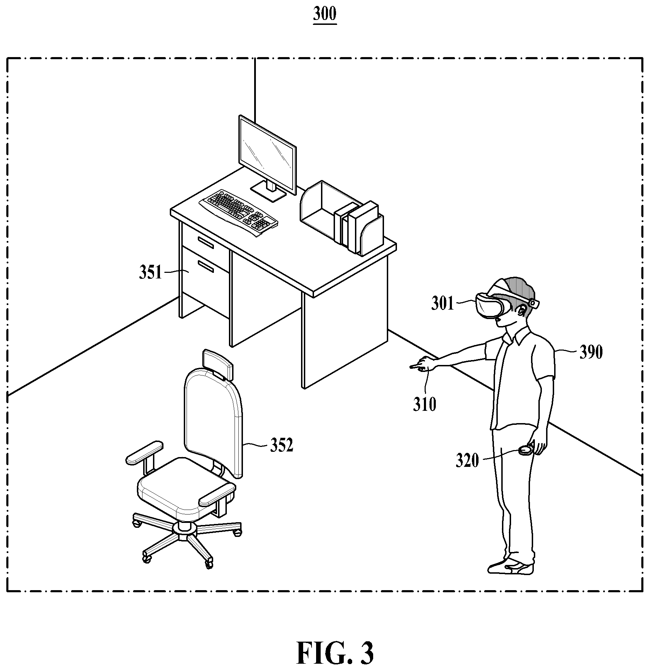

FIG. 3 illustrates an example of establishing a virtual space and an input from a user and an output to the user in the virtual space according to various embodiments.

By using a sensor, an electronic device (e.g., the electronic device 101 of FIG 1 or the electronic device 201 of FIG. 2) may obtain space information regarding a physical space in which the sensor is positioned. For example, the space information may include a geographical position of the physical space in which the sensor is positioned, the appearance of the space, a position of a physical object 351 disposed in the space, the size of the physical object 351, the appearance of the physical object 351, and illuminant information. The appearance of the space and the appearance of the physical object 351 may include at least one of shapes, textures, and colors of the space and the physical object 351. For example, the illuminant information may be information regarding a light source that emits light in the physical space and may include at least one of the intensity, direction, or color of illuminance. The sensor described above may collect information to provide AR. For example, referring to the AR device illustrated in FIG. 2, the sensor may include a camera (e.g., the second functional cameras 211 and 212 of FIG. 2) and a depth sensor (e.g., the depth sensor 217 of FIG. 2). However, the example is not limited thereto, and the sensor may further include at least one of an IR sensor, a depth sensor (e.g., a light detection and ranging (lidar) sensor, a radar sensor, or a stereo camera), a gyro sensor, an acceleration sensor, or a geomagnetic sensor.

An electronic device 301 may collect space information over multiple time frames. For example, in each time frame, in a physical space, the electronic device 301 may collect information regarding a space of a portion included in a scene within a sensing range (e.g., an FoV range) of the sensor at the position of the electronic device 301. The electronic device 301 may track a change (e.g., position movement or state change) in an object over time by analyzing the space information of the multiple time frames. The electronic device 301 may also obtain integrated space information (e.g., an image spatially stitched with surrounding scenes of the electronic device 301 in the physical space) regarding an integrated sensing range of a plurality of sensors by comprehensively analyzing space information collected by the plurality of sensors.

The electronic device 301 according to an embodiment may analyze the physical space into 3D information using various input signals (e.g., sensing data of a red, green, and blue (RGB) camera, an IR sensor, a depth sensor, or a stereo camera) of the sensor. For example, the electronic device 301 may analyze at least one of the shape, size, and position of the physical space, and the shape, size, or position of the physical object 351.

For example, the electronic device 301 may detect an object captured in a scene corresponding to the FoV of the camera using sensing data (e.g., a captured image) of the camera (e.g., the second functional cameras 211 and 212 of FIG. 2). The electronic device 301 may determine a label (e.g., refers to information indicating a category of an object and includes a value indicating a chair, a monitor, or a plant) of the physical object 351 from a 2D scene image and an area (e.g., a bounding box) occupied by the physical object 351 in a 2D scene. Accordingly, the electronic device 301 may obtain the 2D scene information at a position viewed by a user 390. In addition, the electronic device 301 may also calculate a position of the electronic device 301 in the physical space based on the sensing data of the camera.

The electronic device 301 may obtain position information of the user 390 and depth information of the real space in a viewing direction using sensing data (e.g., depth data) of a depth sensor (e.g., the depth sensor 217 of FIG. 2). The depth information may be information indicating a distance from the depth sensor to each point and may be represented in the form of a depth map. The electronic device 301 may analyze a pixel-wise distance at a 3D position viewed by the user 390.

The electronic device 301 may obtain information including a 3D point cloud and a mesh using a variety of sensing data. The electronic device 301 may obtain a surface, a mesh, or a 3D coordinate point cluster forming the space by analyzing the physical space. The electronic device 301 may obtain a 3D point cloud indicating physical objects based on the obtained information described above.

The electronic device 301 may obtain information including at least one of 3D position coordinates, 3D shapes, or 3D sizes (e.g., 3D bounding boxes) of physical objects disposed in the physical space by analyzing the physical space.

Accordingly, the electronic device 301 may obtain physical object information detected in the 3D space and semantic segmentation information regarding the 3D space. The physical object information may include at least one of the position, appearance (e.g., the shape, texture, and color), or size of the physical object 351 in the 3D space. The semantic segmentation information may be information obtained by semantically segmenting the 3D space into partial spaces, and for example, may include information indicating that the 3D space is segmented into an object and background, and information indicating that the background is segmented into a wall, a floor, and a ceiling. The electronic device 301 may obtain and store the 3D information (e.g., the space information) regarding the physical space and the physical object 351 as described above. The electronic device 301 may store 3D position information of the user 390 in the space together with the space information.

The electronic device 301 according to an embodiment may build a virtual space 300 based on a physical position of the user 390 and/or the electronic device 301. The electronic device 301 may generate the virtual space 300 with reference to the space information described above. The electronic device 301 may generate the virtual space 300 having the same scale as the physical space based on the space information and may dispose an object in the generated virtual space 300. The electronic device 301 may provide complete VR to the user 390 by outputting an image that replaces the entire physical space. The electronic device 301 may provide MR or AR by outputting an image that replaces a portion of the physical space. Although the establishment of the virtual space 300 based on the space information obtained by analyzing the physical space described above is described, the electronic device 301 may also build the virtual space 300 regardless of the physical position of the user 390. Herein, the virtual space 300 may be a space corresponding to AR or VR and may also be referred to as a metaverse space.

For example, the electronic device 301 may provide a virtual graphic representation that replaces at least a partial space of the physical space. The electronic device 301 based on optical see-through may overlay and output the virtual graphic representation on a screen area corresponding to at least a partial area in a screen display unit. The electronic device 301 based on VST may output a generated image by replacing an image area corresponding to at least a partial area with the virtual graphic representation in a space image corresponding to the physical space rendered based on the space information. The electronic device 301 may replace at least a portion of the background in the physical space with a virtual graphic representation, but the example is not limited thereto. The electronic device 301 may perform additional arrangement of a virtual object 352 in the virtual space 300 based on the space information without changing the background.

The electronic device 301 may dispose and output the virtual object 352 in the virtual space 300. The electronic device 301 may set a manipulation area of the virtual object 352 in a space (e.g., the volume corresponding to the appearance of the virtual object 352) occupied by the virtual object 352. The manipulation area may refer to an area in which manipulation of the virtual object 352 occurs. In addition, the electronic device 301 may replace the physical object 351 with the virtual object 352 and may output the virtual object 352. The virtual object 352 corresponding to the physical object 351 may have a shape that is the same as or similar to the physical object 351. However, the example is not limited thereto, and the electronic device 301 may set a manipulation area at a position corresponding to the physical object 351 or in a space occupied by the physical object 351 without outputting the virtual object 352 replacing the physical object 351. For example, the electronic device 301 may transmit visual information (e.g., light reflected from the physical object 351 or a captured image of the physical object 351) representing the physical object 351 to the user 390 without modification and may set the manipulation area to the physical object 351. The manipulation area may be set to the same shape and volume as the space occupied by the physical object 351 or the virtual object 352, but the example is not limited thereto. The electronic device 301 may set the manipulation area smaller than the space occupied by the virtual object 352 of the space occupied by the physical object 351.

According to an embodiment, the electronic device 301 may arrange the virtual object 352 (e.g., an avatar object) representing the user 390 in the virtual space 300. When providing an avatar object in a first-person view, the electronic device 301 may visualize a graphic representation corresponding to a portion (e.g., a hand, a torso, or a leg) of the avatar object for the user 390 via the display (e.g., the optical see-through display or VST display) described above. However, the example is not limited thereto, and when providing the avatar object in a thirdperson view, the electronic device 301 may visualize a graphic representation corresponding to the entire shape (e.g., a rear shape) of the avatar object for the user 390 via the display described above. The electronic device 301 may provide the user 390 with experience integrated with the avatar object.

In addition, the electronic device 301 may provide an avatar object of another user entering the same virtual space 300. The electronic device 301 may receive feedback information that is the same as or similar to feedback information (e.g., information based on at least one of visual, auditory, and tactile senses) provided to the other electronic device 301 entering the same virtual space 300. For example, when an object is disposed in the virtual space 300 that is arbitrary and a plurality of users accesses the virtual space 300, the electronic devices 301 of the plurality of users may receive feedback information (e.g., a graphic representation, a sound signal, or haptic feedback) of the object disposed in the virtual space 300 and may provide the feedback information to the users 390, respectively.

The electronic device 301 may detect an input to an avatar object of the other electronic device 301 and may receive feedback information from the avatar object of the other electronic device 301. Exchange of an input and feedback in the virtual space 300 may be performed by a server (e.g., the server 108 of FIG. 1). For example, the server (e.g., a server that provides the metaverse space) may transmit an input and feedback between the avatar object of the user 390 and an avatar object of the other user to the user 390. However, the example is not limited thereto, and without the server, the electronic device 301 may directly establish communication with the other electronic device 301 to provide an input based on the avatar object or receive the feedback.

For example, based on detecting a user input to select the manipulation area, the electronic device 301 may determine that the physical object 351 corresponding to the selected manipulation area is selected by the user 390. The input of the user 390 may include at least one of a gesture input using a part (e.g., a hand or an eye) of the body, an input using a separate VR accessory device, or a voice input of the user.

The gesture input may be an input corresponding to a gesture identified based on tracking a body part 310 of the user 390, and may include, for example, an input to select or indicate an object. The gesture input may include at least one of a gesture in which a body part (e.g., a hand) is directed toward the object for a predetermined time or more, a gesture of pointing the object with a body part (e.g., a finger, an eye, or the head), or a gesture in which a body part is spatially in contact with the object. A gesture of pointing the object with the eye may be identified based on eye gaze tracking. A gesture of pointing the object with the head may be identified based on head tracking.

Tracking the body part 310 of the user 390 may be performed mainly based on the camera of the electronic device 301, but the example is not limited thereto. The electronic device 301 may track the body part 310 based on cooperation of sensing data (e.g., image data of the camera and depth data of the depth sensor) of a vision sensor and information (e.g., controller tracking or finger tracking in a controller) collected by an accessory device described below. Finger tracking may be performed by sensing contact or distance between an individual finger and a controller based on a sensor (e.g., an IR sensor) provided in the controller.

The VR accessory device may include a ride-on device, a wearable device, a controller device 320, or other sensor-based devices. The ride-on device may be a device that the user 390 rides on and manipulates, and may include, for example, at least one of a treadmill-type device or a chair-type device. The wearable device may be a manipulation device worn on at least a part of the body of the user 390 and may include, for example, at least one of a full or half body suit-type controller, a vest-type controller, a shoe-type controller, a bag-type controller, a glovetype controller (e.g., a haptic glove), or a face mask-type controller. The controller device 320 may include, for example, an input device (e.g., a stick-type controller or a firearm) manipulated by a hand, a foot, a toe, or other body parts 310.

The electronic device 301 may track at least one of a position or a motion of the accessory device by directly establishing communication with the accessory device, but the example is not limited thereto. The electronic device 301 may perform communication with the accessory device via a base station for VR.

For example, based on detecting an action to gaze the virtual object 352 for a predetermined time or more through the eye gaze tracking technique described above, the electronic device 301 may determine that the virtual object 352 is selected. In another example, the electronic device 301 may recognize a gesture of pointing the virtual object 352 through the hand tracking technique. The electronic device 301 may determine that the virtual object 352 is selected based on a direction pointed by a tracked hand pointing the virtual object 352 for a determined time or more or a hand of the user 390 being in contact with or entering an area occupied by the virtual object 352 in the virtual space 300.

The voice input of the user may be an input corresponding to a voice of the user obtained by the electronic device 301, and may include, for example, voice data sensed by an input module (e.g., a microphone) of the electronic device 301 or received from an external electronic device of the electronic device 301. The electronic device 301 may determine that the physical object 351 or the virtual object 352 is selected by analyzing the voice input of the user. For example, based on detecting a keyword indicating at least one of the physical object 351 or the virtual object 352 from the voice input of the user, the electronic device 301 may determine that at least one of the physical object 351 or the virtual object 352 corresponding to the detected keyword is selected.

In response to the input of the user 390 described above, the electronic device 301 may provide feedback described below.

For example, the feedback may include visual feedback, auditory feedback, haptic feedback, olfactory feedback, or gustatory feedback. For example, the feedback may be rendered by the server 108, the electronic device 101, or the external electronic device 102 as described above with reference to FIG. 1.

The visual feedback may include an operation of outputting an image on a display (e.g., a transparent display or an opaque display) of the electronic device 301.

The auditory feedback may include an operation of outputting sound via a speaker of the electronic device 301.

The haptic feedback may include force feedback that simulates the weight, shape, texture, size, and dynamics. For example, a haptic glove may include a haptic element (e.g., an electric muscle) that may simulate tactile sensation by tensing and relaxing the body of the user 390. The haptic element in the haptic glove may function as a tendon. The haptic glove may provide haptic feedback to the entire hand of the user 390. The electronic device 301 may provide feedback representing the shape, size, and rigidity of the object via the haptic glove. For example, the haptic glove may generate a force that mimics the shape, size, and rigidity of the object. The exoskeleton of the haptic glove (or a suit-type device) may include a sensor and a finger motion measuring device and may transmit the haptic information to the body by transmitting a cable-pulling force (e.g., an electromagnetic, direct current (DC) motor-based, or pneumatic force) to fingers of the user 390. Hardware providing the haptic feedback may include a sensor, an actuator, a power supply, and wireless transmission circuitry. The haptic glove may operate by inflating and deflating an inflating air bag on the surface of the glove.

The electronic device 301 may provide the feedback to the user 390 based on selecting the object in the virtual space 300. For example, the electronic device 301 may output a graphic representation (e.g., a representation highlighting the selected object) indicating the selected object on the display. In another example, the electronic device 301 may output a sound (e.g., a voice) announcing the selected object via the speaker. In another example, the electronic device 301 may provide a haptic motion that simulates the tactile sensation of the object to the user 390 by transmitting an electrical signal to a haptic supporting device (e.g., the haptic glove).

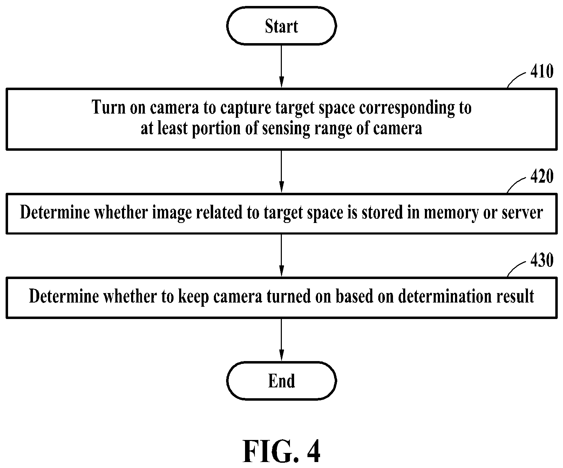

FIG. 4 is a flowchart schematically illustrating a process of controlling a camera for image capturing by an electronic device according to various embodiments.

A camera for image capturing (e.g., the second functional cameras 211 and 212 of FIG. 2) of an electronic device (e.g., the electronic device 101 of FIG. 1, the electronic device 201 of FIG. 2, and the electronic device 301 of FIG. 3) according to an embodiment may capture a real space. The electronic device may use the real space captured by the camera to provide AR and MR technologies.

A typical electronic device may generate an image related to the real space by capturing the real space with a camera for image capturing and may transmit the image related to the real space to a processor (e.g., the processor 120 of FIG. 1). In addition, the processor of the electronic device may generate a virtual space image by synthesizing a virtual object with the image related to the real space. The processor of the electronic device may output the generated virtual space image on a display. On the other hand, the electronic device according to an embodiment may use an image related to the real space captured by the camera for image capturing when generating a virtual space image or may use an image related to the real space stored in the memory or the server. When generating the virtual space image using the image related to the real space stored in the memory or the server, the electronic device according to an embodiment may reduce power consumption in the electronic device by turning off the camera for image capturing. Hereinafter, a process of the electronic device according to an embodiment to control the camera for image capturing is described.

In operation 410, the electronic device may turn on a camera for image capturing (hereinafter, also referred to as a "camera") to capture a target space corresponding to at least a portion of a sensing range of the camera. The target space may include a space disposed in a heading direction of the electronic device (or the camera) from the electronic device (or the camera). According to an embodiment, the target space may include a space corresponding to an FoV of a user. The camera may capture an object disposed in the target space. The camera of the electronic device may capture the target space from various angles according to the gaze of the user. In addition, the camera of the electronic device may capture the target space at various positions as the user moves. The electronic device may be positioned in the target space to capture the target space or may be positioned outside the target space to capture the target space. However, for ease of description, a case where the electronic device is positioned in the target space is mainly described.

In operation 420, the electronic device may determine whether the image related to the target space is stored in the memory or the server. For example, the electronic device may determine whether the image related to the target space is stored, based on whether a 360-degree image related to the target space is stored in the memory or the server.

Hereinafter, for ease of description, the description is mainly provided based on that an electronic device 501 determines whether an image related to a target space 510 is stored in the memory or the server of the electronic device.

In operation 430, the electronic device may determine whether to keep the camera turned on based on a determination result. The electronic device may determine whether to keep the camera turned on based on whether the image related to the target space is stored in the memory or the server. Keeping the camera turned on may refer to controlling the camera to continuously capture the real space.

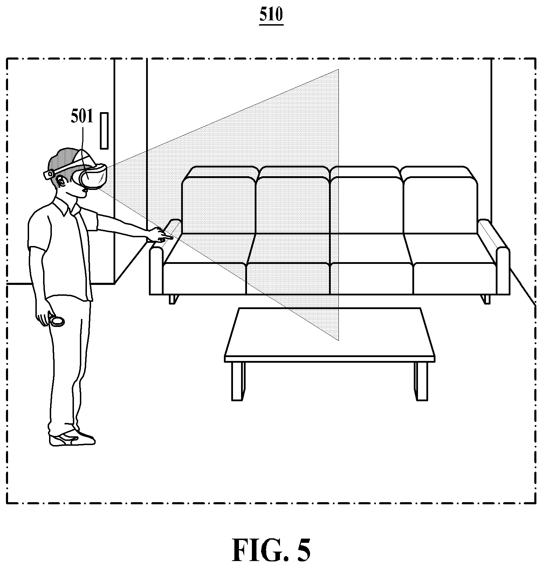

FIG. 5 is a diagram illustrating a process of identifying a target space and determining whether an image of the identified target space is stored in a memory or a server by an electronic device according to various embodiments.

In an embodiment, the electronic device 501 (e.g., the electronic device 101 of FIG. 1, the electronic device 201 of FIG. 2, and the electronic device 301 of FIG. 3) may determine whether an image related to the target space 510 corresponding to an FOV of a user is stored in a server (e.g., the server 108 of FIG. 1) or a memory (e.g., the memory 130 of FIG. 1) of the electronic device.

In an embodiment, the electronic device 501 may identify the target space 510. Identifying the target space 510 may refer to determining a type of the target space 510. For example, a plurality of spaces distinguished from each other may exist in a real space. The plurality of spaces may be divided by a physical wall or a door. An example of the space may be a "living room", a "bedroom", a "kitchen", or an "office". The electronic device 501 may identify the target space 510 corresponding to the FoV of the user among the plurality of spaces. For example, referring to FIG. 5, the electronic device 501 may identify the target space 510 corresponding to the FoV of the user as a "living room".

In an embodiment, the electronic device 501 may calculate the position of the electronic device 501 in the real space. The electronic device 501 may identify the target space 510 based on the position of the electronic device 501 in the real space. For example, the electronic device 501 may set a space range for each of the plurality of spaces distinguished from each other in the real space. The electronic device 501 may identify the space range to which the position of the electronic device 501 belongs in the real space and may identify a space corresponding to the identified space range as the target space 510. For example, the electronic device 501 may identify that the position of the electronic device 501 in the real space is within the space range set to the "living room", and in this case, the electronic device 501 may identify the target space 510 as the "living room".

In an embodiment, the electronic device 501 may determine whether the image related to the target space 510 is stored in the memory or the server of the electronic device 501 by identifying the target space 510. In an embodiment, the electronic device 501 may store respective images of the plurality of spaces distinguished from each other in the real space. For example, the electronic device 501 may separately store an image related to the "kitchen" and an image related to the "living room".

For example, the electronic device 501 may determine whether the image related to the target space 510 is stored in the memory or the server of the electronic device 501, based on whether a 360-degree image related to the target space 510 is stored in the memory or the server. The 360-degree image related to the target space 510 may refer to an image captured with a horizontal angle of view from -180 degrees to +180 degrees and a vertical angle of view from - 90 degrees to +90 degrees in the target space 510. For example, when an image with respect to the target space 510 in a specific direction is not stored, the electronic device 501 may determine that the image related to the target space 510 is not stored in the memory or the server.

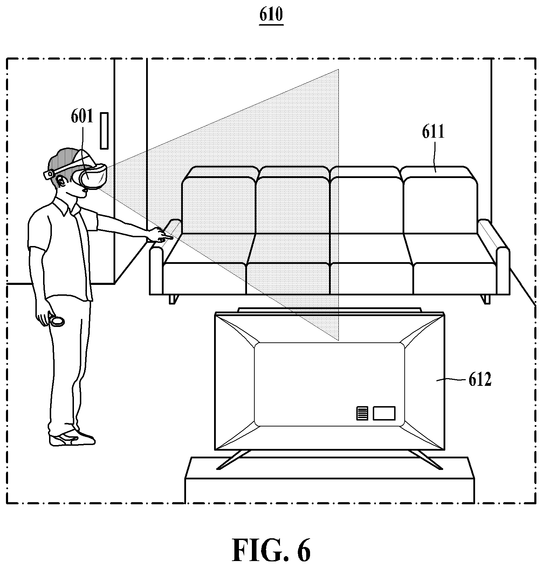

In an embodiment, when the electronic device 501 determines that the image related to the target space 510 is not stored in the memory or the server, the electronic device 501 may process and store a real-time image captured by the camera as the image related to the target space 510 while keeping the camera turned on. The electronic device 501 may generate images related to the target space 510 in various directions by processing the real-time image captured by the camera. The electronic device 501 may store the generated image related to the target space 510. In addition, the electronic device 501 may identify an image in a direction that is not stored among images in a plurality of directions in the target space 510 and may output an interface to instruct to capture an image in the corresponding direction in the target space 510 on the display. The user may change a gaze direction to the corresponding direction in the target space 510 by viewing the interface output on the display. When images related to the target space 510 in all directions are generated using the real-time image captured by the camera, the electronic device 501 may determine that the image related to the target space 510 is stored and may perform the following operation. Hereinafter, in FIG. 6, an operation of the electronic device 501 after the electronic device 501 determines that the image related to the target space 510 is stored, is described.

FIG. 6 is a diagram illustrating a process of determining whether a change in a target space occurs by an electronic device according to various embodiments.

In an embodiment, when an electronic device 601 (e.g., the electronic device 101 of FIG. 1, the electronic device 201 of FIG. 2, the electronic device 301 of FIG. 3, and the electronic device 501 of FIG. 5) determines that an image related to a target space 610 is stored in a memory (e.g., the memory 130 of FIG. 1) or a server (e.g., the server 108 of FIG. 1), the electronic device 601 may determine whether a change in the target space 610 occurs by comparing a real-time image captured by the camera with an image related to the target space stored in the memory or the server.

In an embodiment, the electronic device 601 may determine whether the change in the target space 610 occurs using at least one object (e.g., an object 611 or an object 612) disposed in the target space 610. For example, in response to a change in at least one of a position and a shape of at least one object (e.g., the object 611 or the object 612) disposed in the target space 610, the electronic device 601 may determine that the change in the target space 610 has occurred.

In an embodiment, the electronic device 601 may detect an object (e.g., the object 611 or the object 612) disposed in the target space 610 from a real-time image captured by the camera. For example, the electronic device 601 may detect the object (e.g., the object 611 or the object 612) disposed in the target space 610 by applying an object detection algorithm to the real-time image captured by the camera. The object detection algorithm may include, for example, Haar CasCade and You Only Look Once (YOLO), but the example is not limited thereto.

In an embodiment, the electronic device 601 may calculate a position of the object (e.g., the object 611 or the object 612) detected from the real-time image in the target space 610. For example, the electronic device 601 may calculate a distance from the electronic device 601 to the object (e.g., the object 611 or the object 612) via a depth sensor (e.g., the depth sensor 217 of FIG. 2). The electronic device 601 may calculate a direction toward the object (e.g., the object 611 or the object 612) based on the electronic device 601. In addition, the electronic device 601 may calculate a position of the electronic device 601 in the target space 610. The electronic device 601 may calculate a position of the object (e.g., the object 611 or the object 612) in the target space 610 by considering the position of the electronic device 601 in the target space 610 and the direction and distance from the electronic device 601 to the object 611.

In an embodiment, the electronic device 601 may calculate the shape of the object (e.g., the object 611 or the object 612) detected from the real-time image. For example, the electronic device 601 may extract a feature of the object (e.g., the object 611 or the object 612) in an image including the object (e.g., the object 611 or the object 612) using an algorithm, such as scale invariant feature transform (SIFT), speeded up robust features (SURF), or oriented fast and rotated brief (ORB), and may identify the shape of the object (e.g., the object 611 or the object 612) using the extracted feature.

In an embodiment, the electronic device 601 may determine whether the change in the target space 610 occurs based on calculating the position and the shape of the object (e.g., the object 611 or the object 612) in the target space 610 from the real-time image.

For example, the image related to the target space 610 stored in the memory or the server of the electronic device 601 may include information about the position and the shape of the object in the target space 610, wherein the object is disposed in the target space 610. When the object (e.g., the object 612) is not present in the image related to the target space 610 or at least one of the position and the shape of the object (e.g., the object 611), which is included in the image related to the target space 610, in the target space 610 is different from the position and the shape of the object (e.g., the object 611) calculated from the real-time image in the target space 610, the electronic device 601 may determine that the change in the target space 610 has occurred.

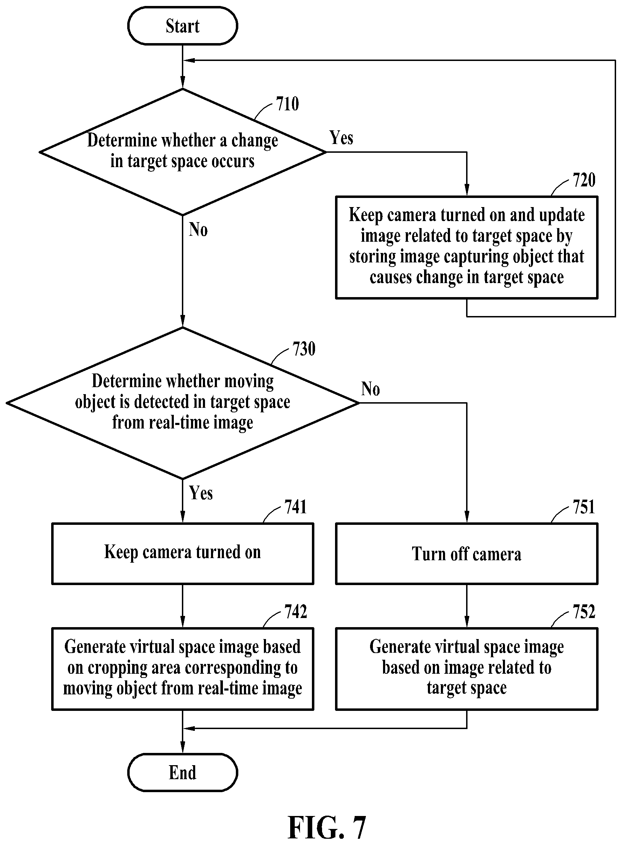

FIG. 7 is a flowchart illustrating a method of controlling a camera by an electronic device based on whether a change in a target space occurs according to various embodiments.

In operation 710, an electronic device (e.g., the electronic device 101 of FIG. 1, the electronic device 201 of FIG. 2, the electronic device 301 of FIG. 3, the electronic device 501 of FIG. 5, or the electronic device 601 of FIG. 6) may determine whether a change in a target space occurs. As described with reference to FIG. 6, the electronic device may detect at least one object disposed in the target space from a real-time image captured by a camera and may determine whether the change in the target space occurs based on the position and shape of at least one object that is detected in the target space.

In operation 720, when the electronic device determines that the change in the target space has occurred, the electronic device may keep the camera turned on and may store an image capturing an object that causes the change in the target space, thereby updating an image related to the target space.

In an embodiment, the electronic device may extract an image capturing the object that causes the change in the target space from the real-time image captured by the camera. The electronic device may update the image related to the target space using the extracted image. For example, the electronic device may extract the image capturing the object based on cropping an area corresponding to the object that causes the change in the target space from an individual image included in the real-time image. In summary, the image related to the target space may be updated through the image related to the object that causes the change in the target space. However, the example is not limited thereto, and the image related to the target space may be updated through the real-time image captured by the camera.

For example, the electronic device may calculate a capturing direction of the real-time image capturing the object that causes the change in the target space, in the target space. Among images included in the image related to the target space, the electronic device may change an image in the same direction as the calculated capturing direction to the real-time image capturing the object that causes the change in the target space. For example, the electronic device may update information about the object that causes the change in the target space in the image related to the target space. The electronic device may update the information about the object with the position and shape of the calculated object that causes the change in the target space from the real-time image, in the target space.

In an embodiment, the electronic device may update the information about the target space when the change in the target space has occurred. In addition, in operation 710, the electronic device may determine again whether the change in the target space has occurred by comparing the updated information about the target space with the real-time image captured by the camera. When the electronic device determines that the change in the target space has occurred, in operation 720, the electronic device may further update the image related to the target space. For example, until the electronic device determines that the target space is not changed, the electronic device may update the information about the target space.

In operation 730, when the electronic device determines that the target space is not changed, the electronic device may determine whether a moving object is detected in the target space from the real-time image.

In an embodiment, the electronic device may not consider the presence of the moving object in the target space. In this case, when the electronic device determines that the target space is not changed, the electronic device may generate a virtual space image using the image related to the target space stored in the memory or the server. For example, the electronic device may extract an image of a space corresponding to the FoV of the user from the image related to the target space stored in the memory or the server and may display the image on a screen. For example, the electronic device may load the image related to the target space corresponding to the FoV of the camera from the information about the target space stored in the memory or the server and may generate the virtual space image that constitutes a virtual space image by synthesizing the loaded image with a virtual object.

In another embodiment, when the moving object is present in the target space even if the current target space is not changed, the target space may be suddenly changed, and thus, the electronic device may consider the presence of the moving object. In this case, as in operation 730, the electronic device may determine whether a moving object is detected in the target space and may change the method of generating a virtual space image according to the detection of the moving object. This is further described below.

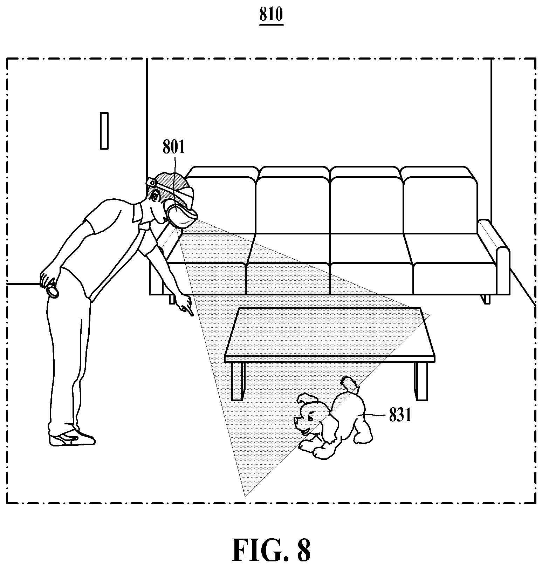

FIG. 8 is a diagram illustrating a process of detecting a moving object in a target space from a real-time image by an electronic device according to various embodiments.

Referring to FIG. 8, when a position of an object (e.g., an object 831) in a target space 810 is changed in a real-time image captured by a camera, an electronic device 801 may determine that the object (e.g., the object 831) is a moving object. In another example, the electronic device 801 may determine a type (e.g., human, a dog, a cat, a desk, or a television (TV)) of an object detected from the real-time image through a machine learning model and may determine whether the object is a moving object based on the type of the object. For example, the electronic device may determine that the type of the object 831 detected from the real-time image is a "dog" and may determine that the object 831 determined to be a "dog" is a moving object.

Referring back to FIG. 7, in operation 741, when the moving object is detected in the target space from the real-time image, the electronic device may keep the camera turned on. In addition, in operation 741, when the moving object is detected in the target space from the real-time image, the electronic device may generate the virtual space image based on cropping an area corresponding to the detected moving object from the real-time image.

For example, the electronic device may crop the area in which the moving object appears from each of a plurality of real-time images included in the real-time image. The electronic device may generate the virtual space image using a crop area that is a cropped area in which the moving object appears from the real-time image.

For example, the electronic device may generate the virtual space image similar to a real space image corresponding to the FoV of the camera. The electronic device may generate an area of the virtual space image other than the area corresponding to the moving object through the image related to the target space stored in the memory or the server. For example, the electronic device may load an existing image related to the target space corresponding to the FoV of the camera from the image related to the target space stored in the memory or the server and may change the existing image by replacing an area corresponding to the moving object in the loaded existing image with the crop area. In addition, the electronic device may generate the virtual space image by synthesizing the changed existing image with a virtual object. Since the electronic device uses only the area in which the moving object appears in the real-time image to generate the virtual space image rather than using the entire real-time image captured by the camera, the power consumption may be reduced compared to generating the virtual space image using the entire real-time image.

In operation 751, when the moving object is not detected in the target space from the real-time image, the electronic device may turn off the camera. In addition, in operation 752, when the moving object is not detected in the target space from the real-time image, the electronic device may generate the virtual space image based on the image related to the target space.

For example, the electronic device may generate the virtual space image similar to a real space image corresponding to the FoV of the camera. In this case, the electronic device may load the image related to the target space corresponding to the FoV of the camera from the information about the target space stored in the memory or the server and may generate the virtual space image by synthesizing the loaded image with a virtual object.

As described above, when the target space is not changed and the moving object is not detected in the target space, the electronic device may stop capturing using the camera and may generate the virtual space image using only the image related to the target space stored in the memory or the server. In this case, since the electronic device turns off the camera, the power consumption may be significantly reduced compared to generating the virtual space image by capturing the real space using the camera. For example, since the time required for camera capturing when the electronic device generates the virtual space image is reduced, latency until outputting the virtual space image on the display may be reduced.

In an embodiment, when the moving object is not detected in the target space from the real-time image, the electronic device may turn off the camera and may turn on an auxiliary camera that is different form the camera to continuously monitor whether the moving object is detected in the target space. For example, the auxiliary camera (e.g., the first functional camera 215 of FIG. 2) may be a 6 DoF camera used to recognize the movement of an external object.

A head-mounted electronic device according to an embodiment may include the camera 211; 212 capturing a real space, the memory 130 storing computer-executable instructions, and the processor 120 executing the instructions by accessing the memory 130. The instructions, when executed, may cause the processor 120 to turn on the camera 211; 212 to capture the target space 510; 610; 810 corresponding to at least a portion of the sensing range of the camera 211; 212, determine whether an image related to the target space 510; 610; 810 is stored in the memory 130 or the server 108, and determine whether to keep the camera 211; 212 turned on based on a result of the determining.

The instructions, when executed, may cause the processor 120 to calculate a position of the electronic device 101; 201; 301; 501; 601; 801 in a real space and identify the target space 510; 610; 810 based on the calculated position of the electronic device 101; 201; 301; 501; 601; 801 in the real space.

The instructions, when executed, may cause the processor 120 to, when the image related to the target space 510; 610; 810 is determined not to be stored in the memory 130, process and store a real-time image captured by the camera 211; 212 as the image related to the target space 510; 610; 810 while keeping the camera 211; 212 turned on.

The instructions, when executed, may cause the processor 120 to, when the image related to the target space 510; 610; 810 is determined to be stored in the memory 130, determine whether a change in the target space 510; 610; 810 occurs by comparing the real-time image captured by the camera 211; 212 with the image related to the target space 510; 610; 810.

The instructions, when executed, may cause the processor 120 to detect at least one object disposed in the target space 510; 610; 810 from a real-time image and calculate a position and a shape of the at least one detected object in the target space 510; 610; 810, and determine whether a change in the target space 510; 610; 810 occurs based on the position and the shape of the at least one detected object in the target space 510; 610; 810.

The instructions, when executed, may cause the processor 120 to, when the change in the target space 510; 610; 810 is determined to have occurred, keep the camera 211; 212 turned on and update the image related to the target space 510; 610; 810 by storing an object that causes the change in the target space 510; 610; 810.

The instructions, when executed, may cause the processor 120 to, when the change in the target space 510; 610; 810 is determined not to have occurred, generate a virtual space image using the image related to the target space stored in the memory or the server.

The instructions, when executed, may cause the processor 120 to, when the change in the target space 510; 610; 810 is determined not to have occurred, determine whether a moving object is detected in the target space 510; 610; 810 from a real-time image.

The instructions, when executed, may cause the processor 120 to, when a moving object is detected in the target space 510; 610; 810 from a real-time image, keep the camera 211; 212 turned on, and generate a virtual space image based on cropping an area corresponding to the detected moving object from the real-time image.

The instructions, when executed, may cause the processor 120 to, when a moving object is not detected in the target space 510; 610; 810 from a real-time image, turn off the camera 211; 212, and generate a virtual space image based on the image related to the target space.

The instructions, when executed, may cause the processor 120 to, when a moving object is not detected in the target space 510; 610; 810 from a real-time image, turn on an auxiliary camera that is different from the camera 211; 212 to continuously monitor an object that continuously moves in the target space.

A method performed by the processor 120 according to an embodiment may include capturing the target space 510; 610; 810 corresponding to at least a portion of the sensing range of the camera 211; 212 of the electronic device 101; 201; 301; 501; 601; 801 that captures a real space by turning on the camera 211; 212, determining whether an image related to the target space 510; 610; 810 is stored in the memory 130 or the server 108, and determining whether to keep the camera 211; 212 turned on based on a result of the determining.

The capturing of the target space 510; 610; 810 may include calculating a position of the electronic device 101; 201; 301; 501; 601; 801 in a real space, and identifying the target space based on the calculated position of the electronic device 101; 201; 301; 501; 601; 801 in the real space.

The determining of whether to keep the camera 211; 212 turned on may include, when the image related to the target space 510; 610; 810 is determined not to be stored in the memory 130, processing and storing a real-time image captured by the camera 211; 212 as the image related to the target space 510; 610; 810 while keeping the camera 211; 212 turned on.

The determining of whether to keep the camera 211; 212 turned on may include, when the image related to the target space 510; 610; 810 is determined to be stored in the memory 130, determining whether a change in the target space 510; 610; 810 occurs by comparing the real-time image captured by the camera 211; 212 with the image related to the target space 510; 610; 810.

The determining of whether the change in the target space 510; 610; 810 occurs may include detecting at least one object disposed in the target space 510; 610; 810 from a real-time image, calculating a position and a shape of the at least one detected object in the target space 510; 610; 810, and determining whether a change in the target space 510; 610; 810 occurs based on the position and the shape of the at least one detected object in the target space 510; 610; 810.

The determining of whether the change in the target space 510; 610; 810 may include, when the change in the target space 510; 610; 810 is determined to have occurred, keeping the camera 211; 212 turned on and updating the image related to the target space 510; 610; 810 by storing an object that causes the change in the target space 510; 610; 810.

The determining of whether the change in the target space 510; 610; 810 may include, when the change in the target space 510; 610; 810 is determined not to have occurred, determining whether a moving object is detected in the target space 510; 610; 810 from a real-time image.

The determining of whether the change in the target space 510; 610; 810 may include, when a moving object is detected in the target space 510; 610; 810 from a real-time image, keeping the camera 211; 212 turned on, and generating a virtual space image based on cropping an area corresponding to the detected moving object from the real-time image.

The determining of whether the change in the target space 510; 610; 810 may include, when a moving object is not detected in the target space 510; 610; 810 from a real-time image, turning off the camera 211; 212, and generating a virtual space image based on the image related to the target space.

The determining of whether the change in the target space 510; 610; 810 may include, when a moving object is not detected in the target space 510; 610; 810 from a real-time image, turning on an auxiliary camera that is different from the camera 211; 212 to continuously monitor an object that continuously moves in the target space.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "first," "second," "first," or "second" may be used simply to distinguish one component from another and may not limit the components with respect to other aspects (e.g., importance or order). It is to be understood that if a component (e.g., a first component) is referred to, with or without the term "operatively" or "communicatively", as "coupled with," "coupled to," "connected with," or "connected to" another component (e.g., a second component), it means that the component may be coupled with the other component directly (e.g., by wire), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semipermanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments described herein may be implemented using a hardware component, a software component, and/or a combination thereof. A processing device may be implemented using one or more general-purpose or special-purpose computers, such as, for example, a processor, a controller and an arithmetic logic unit (ALU), a digital signal processor (DSP), a microcomputer, an FPGA, a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described examples, or vice versa.

## Claims

1. A head-mounted electronic device (101; 201; 301; 501; 601; 801) comprising:
a camera (211; 212) configured to capture a real space;
a processor (120); and
a memory 130 storing instructions,
wherein the instructions, when executed by the processor (120), cause the head-mounted electronic device (101; 201; 301; 501; 601; 801) to:
turn on the camera (211; 212) to capture a target space (510; 610; 810) corresponding to at least a portion of a sensing range of the camera (211; 212),
determine whether an image related to the target space (510; 610; 810) is stored in the memory (130) or a server (108), and
determine whether to keep the camera (211; 212) turned on based on a result of the determining.

2. The head-mounted electronic device (101; 201; 301; 501; 601; 801) of claim 1, wherein the instructions, when executed by the processor (120), cause the head-mounted electronic device (101; 201; 301; 501; 601; 801) to:
calculate a position of the head-mounted electronic device (101; 201; 301; 501; 601; 801) in a real space and identify the target space (510; 610; 810) based on the calculated position of the head-mounted electronic device (101; 201; 301; 501; 601; 801) in the real space.

3. The head-mounted electronic device (101; 201; 301; 501; 601; 801) of one of claims 1 to 2, wherein the instructions, when executed by the processor (120), cause the head-mounted electronic device (101; 201; 301; 501; 601; 801) to:
when the image related to the target space (510; 610; 810) is determined not to be stored in the memory 130, process and store a real-time image captured by the camera (211; 212) as the image related to the target space (510; 610; 810) while keeping the camera (211; 212) turned on. ,

4. The head-mounted electronic device (101; 201; 301; 501; 601; 801) of one of claims 1 to 3, wherein the instructions, when executed by the processor (120), cause the head-mounted electronic device (101; 201; 301; 501; 601; 801) to:
when the image related to the target space (510; 610; 810) is determined to be stored in the memory (130), determine whether a change in the target space (510; 610; 810) occurs by comparing the real-time image captured by the camera (211; 212) with the image related to the target space (510; 610; 810).

5. The head-mounted electronic device (101; 201; 301; 501; 601; 801) of one of claims 1 to 4, wherein the instructions, when executed by the processor (120), cause the head-mounted electronic device (101; 201; 301; 501; 601; 801) to:
detect at least one object disposed in the target space (510; 610; 810) from a real-time image and calculate a position and a shape of the at least one detected object in the target space (510; 610; 810), and
determine whether a change in the target space (510; 610; 810) occurs based on the position and the shape of the at least one detected object in the target space (510; 610; 810).

6. The head-mounted electronic device (101; 201; 301; 501; 601; 801) of one of claims 1 to 5, wherein the instructions, when executed by the processor (120), cause the head-mounted electronic device (101; 201; 301; 501; 601; 801) to:
when the change in the target space (510; 610; 810) is determined to have occurred, keep the camera (211; 212) turned on and update the image related to the target space (510; 610; 810) by storing an object that causes the change in the target space (510; 610; 810).

7. The head-mounted electronic device (101; 201; 301; 501; 601; 801) of one of claims 1 to 6, wherein the instructions, when executed by the processor (120), cause the head-mounted electronic device (101; 201; 301; 501; 601; 801) to:
when the change in the target space (510; 610; 810) is determined not to have occurred, generate a virtual space image using the image related to the target space stored in the memory or the server.

8. The head-mounted electronic device (101; 201; 301; 501; 601; 801) of one of claims 1 to 7, wherein the instructions, when executed by the processor (120), cause the head-mounted electronic device (101; 201; 301; 501; 601; 801) to:
when the change in the target space (510; 610; 810) is determined not to have occurred, determine whether a moving object is detected in the target space (510; 610; 810) from a real-time image.

9. The head-mounted electronic device (101; 201; 301; 501; 601; 801) of one of claims 1 to 8, wherein the instructions, when executed by the processor (120), cause the head-mounted electronic device (101; 201; 301; 501; 601; 801) to:
when a moving object is detected in the target space (510; 610; 810) from a real-time image, keep the camera (211; 212) turned on, and
generate a virtual space image based on cropping an area corresponding to the detected moving object from the real-time image.

10. The head-mounted electronic device (101; 201; 301; 501; 601; 801) of one of claims 1 to 9, wherein the instructions, when executed by the processor (120), cause the head-mounted electronic device (101; 201; 301; 501; 601; 801) to:
when a moving object is not detected in the target space (510; 610; 810) from a real-time image, turn off the camera (211; 212), and
generate a virtual space image based on the image related to the target space.

11. The head-mounted electronic device (101; 201; 301; 501; 601; 801) of one of claims 1 to 10, wherein the instructions, when executed by the processor (120), cause the head-mounted electronic device (101; 201; 301; 501; 601; 801) to:
when a moving object is not detected in the target space (510; 610; 810) from a real-time image, turn on an auxiliary camera that is different from the camera (211; 212) to continuously monitor an object that continuously moves in the target space.

12. A method performed by a processor (120), the method comprising:
capturing a target space (510; 610; 810) corresponding to at least a portion of a sensing range of a camera (211; 212) of an electronic device (101; 201; 301; 501; 601; 801) that captures a real space by turning on the camera (211; 212);
determining whether an image related to the target space (510; 610; 810) is stored in a memory (130) or a server (108); and
determining whether to keep the camera (211; 212) turned on based on a result of the determining.

13. The method of claim 12, wherein the capturing of the target space (510; 610; 810) comprises:
calculating a position of the head-mounted electronic device (101; 201; 301; 501; 601; 801) in a real space; and
identifying the target space based on the calculated position of the head-mounted electronic device (101; 201; 301; 501; 601; 801) in the real space.

14. The method of one of claims 12 to 13, wherein the determining of whether to keep the camera (211; 212) turned on comprises:
when the image related to the target space (510; 610; 810) is determined not to be stored in the memory 130, processing and storing a real-time image captured by the camera (211; 212) as the image related to the target space (510; 610; 810) while keeping the camera (211; 212) turned on.

15. The method of one of claims 12 to 14, wherein the determining of whether to keep the camera (211; 212) turned on comprises:
when the image related to the target space (510; 610; 810) is determined to be stored in the memory (130), determining whether a change in the target space (510; 610; 810) occurs by comparing the real-time image captured by the camera (211; 212) with the image related to the target space (510; 610; 810).
